# EUROPÄISCHE PATENTSCHRIFT

(11) **EP 1 841 626 B1**
(45) Veröffentlichungstag und Bekanntmachung des Hinweises auf die Patenterteilung: **09.07.2008**
(21) Anmeldenummer: 05803245.9
(22) Anmeldetag: 15.11.2005
(51) Int. Cl.: B60R 21/16

(54) **SCHUTZEINRICHTUNG FÜR FAHRZEUGINSASSEN SOWIE VERFAHREN ZUR FERTIGUNG EINES MEHRKAMMERIGEN GASSACKES**
PROTECTIVE DEVICE FOR VEHICLE PASSENGERS, AND METHOD FOR THE PRODUCTION OF A MULTICHAMBER GAS BAG
DISPOSITIF DE PROTECTION DES OCCUPANTS D'UN VEHICULE ET PROCEDE DE FABRICATION D'UN SAC DE GAZ MULTICHAMBRE

(30) Priorität: 24.12.2004 DE 102004062570
(43) Veröffentlichungstag der Anmeldung: 10.10.2007
(73) Patentinhaber: AUTOLIV DEVELOPMENT AB, 447 83 Vargarda (SE)
(72) Erfinder: SVENBRANT, Emma, S-416 65 Göteborg (SE); AHO, Christian, S-46 132 Trollhättan (SE); BÖRJESON, Gustav, S-441 35 Alingsas (SE)
(74) Vertreter: Stornebel, Kai
(86) Internationale Anmeldenummer: PCT/EP2005/012250
(87) Internationale Veröffentlichungsnummer: WO 2006/074749

(56) Entgegenhaltungen:
- EP-A- 1 008 494
- US-A- 5 586 782
- US-A1- 2003 116 945
- US-A1- 2004 119 270

## Beschreibung

Die Erfindung betrifft eine Schutzeinrichtung für Fahrzeuginsassen mit einem aufblasbaren Gassack mit zumindest zwei Kammern, die bei einem Unfall von einem Gasgenerator mit Gas befüllt werden sowie ein Verfahren zur Fertigung eines mehrkammerigen Gassackes. Eine solche Schutzeinrichtung bzw. ein solcher Gassack ist insbesondere als Seitenaufprallschutz für Fahrzeuginsassen in einem Fahrzeug vorgesehen.

Aus der gattungsgemäße EP 1 008 494 A2 ist eine Gassack-Seitenaufprall-Schutzeinrichtung für Fahrzeuginsassen mit einer Druckgasquelle und einem aufblasbaren Gassack bekannt, wobei der Gassack eine erste, seitlich des Brustkorbs eines Insassen aufblasbare Kammer und eine zweite aufblasbare Kammer aufweist, die seitlich des Beckens des Insassen aufblasbar ist. Die Kammern sind durch die Druckgasquelle so befüllbar, dass sie im befüllten Zustand unterschiedliche Innendrücke aufweisen. Zur Bildung der ersten und zweiten Kammer ist der Gassack mit einer Trennnaht versehen. Diese Trennnaht bildet eine Trennlinie aus, um die die erste und zweite Kammer leicht zueinander verschwenkt werden können. Dadurch ergibt sich eine örtlich sehr instabile Anordnung der beiden Gassackkammern zueinander.

Aus der US 5,586,782 ist ein Airbag zum Schutz eines Fahrzeuginsassen bei einem Seitenaufprall bekannt, der zwei Bereiche mit unterschiedlichen Gasdrücken aufweist. Diese Bereiche werden durch eine Naht oder ein Nahtmuster erzeugt, die die Lagen der Hülle des Airbags miteinander verbinden und somit eine obere und eine untere Kammer ausbilden. Innerhalb des Nahtmusters können Durchgänge vorhanden sein, um einen Gasdurchtritt von der unteren Kammer zur oberen Kammer zu ermöglichen. In einer alternativen Ausgestaltung ist in den eine separate Trennwand eingenäht, die Durchgangsöffnungen zum Gasdurchtritt von der unteren in die obere Kammer aufweist.

Die US 2003/116945 A1 beschreibt einen Airbag mit mehreren Kammern, die miteinander vernäht sind. Das Vernähen erfolgt im Umfang einer Durchgangsöffnung für das von einem entfernt liegenden Gasgenerator bereitgestellte Gas. Das Gas strömt somit durch ein erstes Volumen durch die Durchgangsöffnung in ein zweites Volumen hinein.

Aufgabe der vorliegenden Erfindung ist es, eine verbesserte Schutzeinrichtung für Fahrzeuginsassen und ein verbessertes Verfahren zu deren Herstellung bereitzustellen, um einen stabilen, einfach herzustellenden und für unterschiedliche Druckbereiche ausgelegten Gassack zu erhalten.

Erfindungsgemäß wird diese Aufgabe durch eine Schutzeinrichtung mit den Merkmalen des Anspruchs 1 sowie ein Verfahren mit den Merkmalen des Anspruchs 8 gelöst. Vorteilhafte Ausgestaltungen und Weiterbildungen der Erfindung sind in den Unteransprüchen aufgeführt.

Die erfindungsgemäße Schutzeinrichtung für Fahrzeuginsassen sieht einen aufblasbaren Gassack mit zumindest zwei Kammern vor, die bei einem Unfall von einem Gasgenerator mit Gas befüllt werden. Jede Kammer des Gassackes wird dabei aus einem Gewebezuschnitt gebildet, die übereinander gelegt und miteinander unter Bildung einer Trennebene vernäht sind. Statt einer Trennnaht, die an einem einstückigen Gassack zur Abtrennung zweier Volumina angebracht wird, werden erfindungsgemäß zwei separate Kammern ausgebildet, die miteinander unter Bildung einer Trennebene vernäht sind. Statt einer Trennlinie bildet sich im aufgeblasenen Zustand eine Trennebene aus, von der ausgehend sich die Kammern in einander entgegengesetzte Richtungen erstrecken. Aufgrund der Tatsache, dass die Kammern über eine Trennebene miteinander gekoppelt sind, können die Kammern zueinander nicht mehr oder nur noch in einem geringen Maße gegeneinander bewegt werden, so dass sich ein sehr stabiler, zwei- oder mehrkammeriger Gassack erhalten lässt.

Von jedem Gewebezuschnitt, aus dem die jeweiligen Kammern gebildet werden, liegt somit ein flächiger Bereich in der Trennebene zwischen zwei Kammern, die die Kontaktflächen zwischen den separaten Kammern bilden. Je nach Füllungsgrad und innerhalb der Kammern herrschenden Drücke ist die Trennebene plan oder in Richtung auf die Kammer mit niedrigem Druck gewölbt.

Um auf einfache Art und Weise unterschiedliche Drücke und eine schnellstmögliche Befüllung der voneinander getrennten Kammern zu ermöglichen, weist jede Kammer eine Einströmöffnung für das Gas aus dem Gasgenerator auf. Alternativ können mehrere Gasgeneratoren vorgesehen sein, so dass jede Kammer von einem ihr zugeordneten Gasgenerator befüllt wird. Da in der Regel jedoch nur ein Gasgenerator benötigt wird, sind die Einströmöffnungen vorteilhafterweise so angeordnet, dass über Verteileinrichtungen das von dem gemeinsamen Gasgenerator erzeugte Gas der jeweiligen Einströmöffnung der jeweiligen Kammer zugeleitet wird.

Die Einströmöffnung bzw. Einströmöffnungen sind gegenüber der Trennebene abgedichtet, um zu verhindern, dass der Hohlraum zwischen den zusammengenähten, flächigen Bereichen der jeweiligen Gewebezuschnitte ebenfalls mit Gas des Gasgenerators befüllt wird. Um ein Eindringen von Gas aus dem Gasgenerator zu verhindern, kann die Naht, mit der die flächigen Bereiche der Gewebezuschnitte, die aufeinander genäht werden, umlaufend ausgebildet sein und die Trennebene vollständig umschließen.

Aus fertigungstechnischen Gründen ist es vorzuziehen, dass die Kammern nach dem cut-and-sewn-Verfahren hergestellt werden, also dass die Gewebezuschnitte jeweils übereinander gelegt und durch eine oder mehrere Umfangsnähte zu einem Hohlraum verschlossen werden.

Das erfindungsgemäße Verfahren zur Fertigung eines mehrkammerigen Gassacks sieht vor, dass auf einem Gewebegrundzuschnitt zumindest ein weiterer Gewebezuschnitt unter Bildung einer Trennebene aufgenäht wird und die Gewebezuschnitte zu jeweils einer Kammer mittels einer Umfangsnaht vernäht werden, wobei die Kammern beiderseits der Trennebene einander gegenüberliegend ausgebildet werden. Dazu werden die Gewebezuschnitte nach Bildung der jeweiligen Trennebene gegensinnig umgeschlagen und zu je einer Kammer unter Bildung eines geschlossenen Hohlraumes vernäht.

Neben dem Einsatz als mehrkammeriger Seitenairbag , der beispielsweise in dem Sitz untergebracht sein kann, lässt sich der erfindungsgemäße Airbag auch für andere Airbaganwendungen einsetzen, z.B. als Fahrer-, Beifahrer- oder Knieairbag.

Nachfolgend werden Ausführungsbeispiele der Erfindung anhand der beigefügten Figuren näher erläutert. Gleiche Bezugszeichen in den Figuren bezeichnen gleiche Elemente. Es zeigen:
Figur 1- eine schematische Darstellung eines Gassackes in Seitenansicht;
Figur 2 - Gewebezuschnitte eines Gassackes vor dem Vernähen; sowie
Figur 3 - Gewebezuschnitte einer Variante der Erfindung.

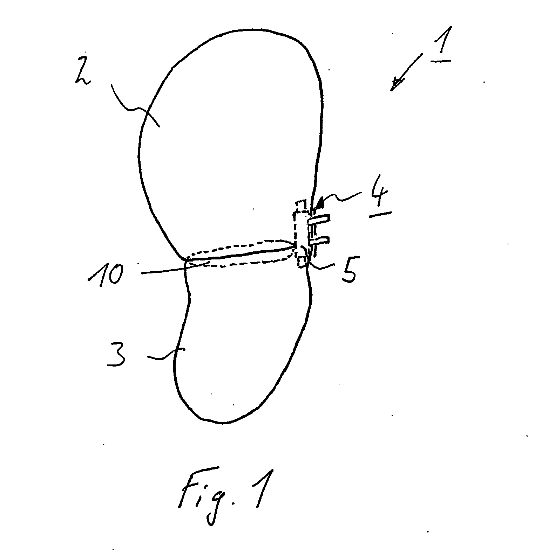

In der Figur 1 ist in einer Draufsicht eine schematische Darstellung einer Schutzeinrichtung für Fahrzeuginsassen mit einem aufblasbaren Gassack 1 mit zwei Kammern 2, 3 gezeigt, die über einen Gasgenerator 4, der an einer nicht dargestellten Fahrzeugkarosserie befestigt ist, mit Gas befüllt wird. In der Figur 1 ist der aufgeblasene Zustand der Kammern 2, 3 gezeigt. An dem Gasgenerator 4 ist ein Deflektor 5 angebracht, über den das im Gasgenerator 4 erzeugte Gas in die separaten Kammern 2, 3 verteilt wird.

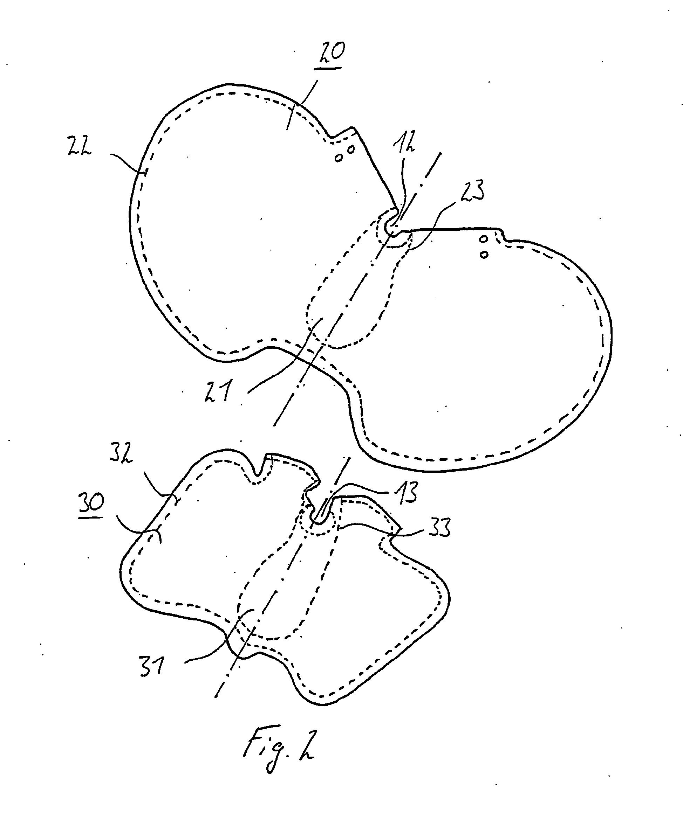

Die Kammern 2, 3 sind aus separaten Gewebezuschnitten 20, 30 gefertigt, die in der Figur 2 gezeigt sind. Diese Gewebezuschnitte 20, 30 sind miteinander vernäht, so dass eine Trennebene 10 zwischen den beiden Kammern 2, 3 ausgebildet ist. Die Trennebene 10 wird durch gleichgroße, flächige Bereiche 21, 31 gebildet. Innerhalb dieser Trennebene 10 liegt eine Lage eines Gewebezuschnittes 20 auf einer Lage des Gewebezuschnittes 30 auf.

In der Figur 2 sind die Gewebezuschnitte 20, 30 in einem nicht vernähten Zustand gezeigt. Die flächigen Bereiche 21, 31 werden übereinander gelegt und mittels einer Verbindungsnaht 23, 33 aneinander genäht. An den Gewebezuschnitten 20, 30 sind Aussparungen für Einströmöffnungen 12, 13 ausgebildet, durch die Gas des Gasgenerators 4 in die jeweiligen Kammern 2, 3 einströmen kann. Zum Schließen der Kammern 2, 3 werden die Gewebezuschnitte 20, 30 an ihren Umfängen übereinander gelegt und mit einer Umfangsnaht 22, 32 vernäht, so dass sich ein geschlossener Hohlkörper als Kammer 2, 3 ausbildet. Die Grundzuschnitte 20, 30 werden voneinander weg zusammengeklappt, so dass im aufgeblasenen Zustand die Kammern 2, 3 beidseitig der Trennebene 10 aufgeblasen werden und einander gegenüberliegen.

Durch das flächige Vernähen der beiden Grundzuschnitte 20, 30 und das Ausbilden einer Trennebene 10, so dass eine gemeinsame Fläche zwischen den beiden separaten Kammern 2, 3 vorliegt, können sich die Kammern 2, 3 nicht oder nur in einem geringen Maße gegeneinander verschwenken, so dass insgesamt ein stabiler Gassack 1 im aufgeblasenen Zustand vorliegt. Die Art und Weise der Herstellung eines solchen zweikammerigen Gassackes 1 ist einfach und wirtschaftlich, wobei die Kammergröße und die Beschaffenheit der jeweiligen Kammer 2, 3 an den jeweiligen Einsatzzweck angepasst werden kann. So ist es beispielsweise möglich, dass die obere Kammer 2 mit einem geringeren Druck als die untere Kammer 3 beaufschlagt wird, um bei einem Seitenaufprall die oberen Extremitäten eines Fahrzeuginsassen weicher auffangen zu können als beispielsweise den Beckenbereich. Durch entsprechend gewählte Gewebe oder Beschichtungen können die Standzeiten der Kammern 2, 3 und die jeweilige Entfaltungscharakteristik an den Einsatzzweck angepasst werden.

Wie der Figur 1 zu entnehmen ist, ist der doppellagige Bereich der Trennebene 10 gegenüber dem Gasgenerator 4 abgedichtet, so dass in dem Zwischenraum zwischen den flächigen Bereichen 21, 31 kein Gas aus dem Gasgenerator 4 eindringen kann. Die Trennebene 10 bzw. der doppellagige, flächige Bereich wird somit nicht aufgeblasen.

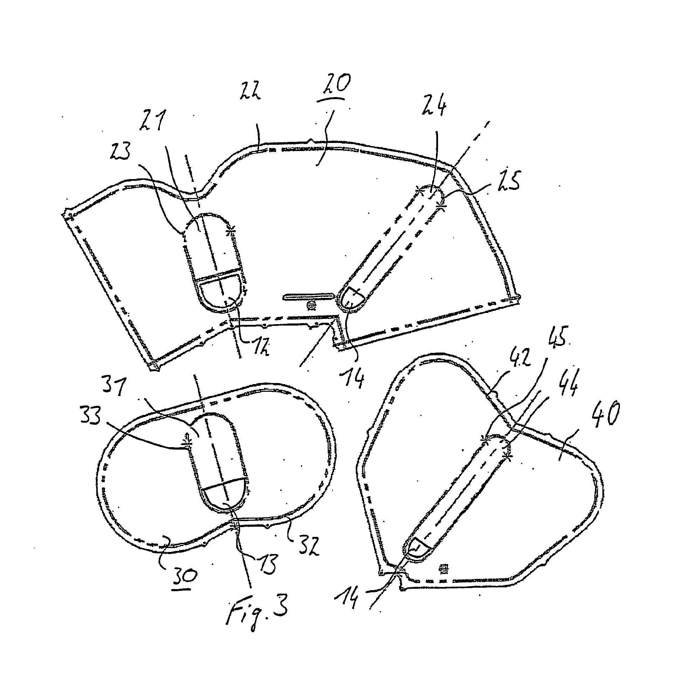

Eine dreikammerige Ausgestaltung der Erfindung wird anhand der Figur 3 erläutert, in der ein Gewebegrundzuschnitt 20 gezeigt ist, auf den zwei weitere Zuschnitte 30, 40 aufgenäht werden. Dies geschieht ebenfalls, indem die entsprechenden flächigen Bereiche 21, 31, 24, 44 übereinander gelegt und über eine umlaufende Naht 23, 33 bzw. 25, 45 miteinander vernäht werden. Durch die Umlaufnähte 23, 33, 25, 45 kann kein Gas aus den Kammern in die Trennebenen eindringen. Einströmöffnungen 12, 13, 14 für Gas aus einem nicht dargestellten Gasgenerator sind ebenfalls vorgesehen. Um den dreikammerigen Gassack fertig zu stellen, werden die Zuschnitte 30, 40 aus der Blattebene nach oben geklappt und an den jeweiligen Umfangsnähten 32, 42 zu einem kammerförmigen Gassack vernäht. Anschließend wird der Grundzuschnitt 20 in die Zeichenebene hinein nach unten umgeklappt, so dass ein großes Kammervolumen nach Fertigstellung der Umfangsnaht 22 vorliegt. Ein Gasgenerator wird mit den Einströmöffnungen 12, 13, 14 verbunden und bewirkt, dass im aufgeblasenen Zustand drei Kammern mit unterschiedlichen Volumina und gegebenenfalls unterschiedlichen Fülldrücken vorliegen. Die Einströmöffnungen 12, 13, 14 sind gegenüber den flächigen Bereichen 21, 31, 24, 44 abgedichtet, so dass die Volumina zwischen den flächigen Bereichen 21, 31, 24, 44 nicht oder nur geringfügig mit Gas des Gasgenerators befüllt werden.

## Patentansprüche

1. Schutzeinrichtung für Fahrzeuginsassen mit einem aufblasbaren Gassack mit zumindest zwei Kammern, die bei einem Unfall von einem Gasgenerator mit Gas befüllt werden, **dadurch gekennzeichnet, dass** jede Kammer (2, 3) aus einem Gewebezuschnitt (20, 30, 40) gebildet ist, die übereinander gelegt und miteinander unter Bildung einer Trennebene (10) zur Abtrennung zweier Volumina vernäht sind, wobei innerhalb der Trennebene (10) eine Lage eines Gewebezuschnittes (20, 30, 40) auf einer anderen Lage eines Gewebezuschnittes (20, 30, 40) aufliegt.

2. Schutzeinrichtung nach Anspruch 1, **dadurch gekennzeichnet, dass** von jedem Gewebezuschnitt (20, 30, 40) ein flächiger Bereich (21, 31; 24, 44) in der Trennebene (10) zwischen zwei Kammern (2, 3) liegt.

3. Schutzeinrichtung nach Anspruch 1 oder 2, **dadurch gekennzeichnet, dass** jede Kammer (2, 3) eine Einströmöffnung (12, 13, 14) für das Gas aus dem Gasgenerator (4) aufweist.

4. Schutzeinrichtung nach Anspruch 3, **dadurch gekennzeichnet, dass** die Einströmöffnung (12, 13, 14) gegenüber der Trennebene (10) abgedichtet ist.

5. Schutzeinrichtung nach einem der voranstehenden Ansprüche, **dadurch gekennzeichnet, dass** die Kammern (2, 3) im gefüllten Zustand einander gegenüberliegend, beidseitig der Trennebene (10) angeordnet sind.

6. Schutzeinrichtung nach einem der voranstehenden Ansprüche, **dadurch gekennzeichnet, dass** die Kammern (2, 3) Umfangsnähte (22, 32) aufweisen, die die Gewebezuschnitte (20, 30) verschließen.

7. Schutzeinrichtung nach einem der voranstehenden Ansprüche, **dadurch gekennzeichnet, dass** auf einem Gewebegrundzuschnitt (20) mehrere Gewebezuschnitte (30, 40) unter Bildung mehrerer Trennebenen (10) aufgenäht sind, die im gefüllten Zustand mehrere Kammern (2, 3) ausbilden.

8. Verfahren zur Fertigung eines mehrkammerigen Gassackes, bei dem auf einen Gewebegrundzuschnitt (20) zumindest ein weiterer Gewebezuschnitt (30; 40) unter Bildung einer Trennebene (10) zur Abgrenzung zweier Volumina aufgenäht wird und die Gewebezuschnitte (20, 30, 40) zu jeweils einer Kammer (2, 3) mittels einer Umfangsnaht (22, 32, 42) vernäht werden, wobei die Kammern (2, 3) beiderseits der Trennebene (10), einander gegenüberliegend ausgebildet werden.

9. Verfahren nach Anspruch 8, **dadurch gekennzeichnet, dass** die Gewebezuschnitte (20, 30, 40) nach Bildung der Trennebene (10) gegensinnig umgeschlagen und zu je einer Kammer (2, 3) vernäht werden.

## Claims

1. A protective device for vehicle passengers, with an inflatable gas bag with at least two chambers which, in the event of an accident, are filled with gas by a gas generator, **characterized in that** each chamber (2, 3) is formed from a fabric section (20, 30, 40), which sections are placed one over another and are sewn to one another, with a parting plane (10) being formed, in order to separate two volumes, one layer of a fabric section (20, 30, 40) lying on another layer of a fabric section (20, 30, 40) within the parting plane (10).

2. A protective device according to claim 1, **characterized in that** a sheet-like region (21, 31; 24, 44) of each fabric section (20, 30, 40) lies in the parting plane (10) between two chambers (2, 3).

3. A protective device according to claim 1 or 2, **characterized in that** each chamber (2, 3) has an inflow opening (12, 13, 14) for the gas from the gas generator (4).

4. A protective device according to claim 3,
**characterized in that** the inflow opening (12, 13, 14) is sealed off from the parting plane (10).

5. A protective device according to any one the preceding claims, **characterized in that** the chambers (2, 3), when filled, are arranged lying opposite each other on both sides of the parting plane (10).

6. A protective device according to any one of the preceding claims, **characterized in that** the chambers (2, 3) have peripheral seams (22, 32) which close the fabric sections (20, 30).

7. A protective device according to any one of the preceding claims, **characterized in that** a plurality of fabric sections (30, 40) is sewn, with a plurality of parting planes (10) being formed, onto a main fabric section (20) and, when filled, forms a plurality of chambers (2, 3).

8. A method for the production of a multichamber gas bag, in which at least one further fabric section (30; 40) is sewn, with a parting plane (10) being formed, onto a main fabric section (20) in order to delimit two volumes, and the fabric sections (20, 30, 40) are sewn up by means of a peripheral seam (22, 32, 42) to form a respective chamber (2, 3), the chambers (2, 3) being formed in a manner such that they lie opposite each other on both sides of the parting plane (10).

9. A method according to claim 8, **characterized in that**, after the parting plane (10) is formed, the fabric sections (20, 30, 40) are turned over in the opposite direction and are sewn to each form a chamber (2, 3).

## Revendications

1. - Dispositif de protection des occupants d'un véhicule automobile comprenant un coussin à gaz gonflable comportant au moins deux chambres qui en cas d'accident peuvent être remplies de gaz à partir d'un générateur de gaz, **caractérisé en ce que** chaque chambre (2, 3) est réalisée à partir d'une partie tissée (20, 30, 40), les parties tissées étant posées l'une sur l'autre et cousues ensemble pour former un plan de séparation (10) pour séparer deux volumes, dans lequel à l'intérieur du plan de séparation (10) une couche d'une partie tissée (20, 30, 40) repose sur une autre couche d'une partie tissée (20, 30, 40).

2. - Dispositif de protection selon la revendication 1, **caractérisé en ce que** pour chaque partie de tissu (20, 30, 40) une zone plane (21, 31 ; 24, 44) est située dans le plan de séparation (10) entre deux chambres (2, 3).

3. - Dispositif de protection selon la revendication 1 ou 2, **caractérisé en ce que** chaque chambre (2, 3) comporte une ouverture d'insufflation (12, 13, 14) pour le gaz à partir du générateur de gaz (4).

4. - Dispositif de protection selon la revendication 3, **caractérisé en ce que** l'ouverture d'insufflation (12, 13, 14) est rendue étanche par rapport au plan de séparation (10).

5. - Dispositif de protection selon l'une des revendications précédentes, **caractérisé en ce que** les chambres (2, 3) sont disposées, à l'état rempli, l'une à l'opposé de l'autre, de part et d'autre du plan de séparation (10).

6. - Dispositif de protection selon l'une des revendications précédentes, **caractérisé en ce que** les chambres (2, 3) présentent des coutures périphériques (22, 32) qui ferment les parties tissées (20, 30).

7. - Dispositif de protection selon l'une des revendications précédentes, **caractérisé en ce que** sur une partie tissée (20) sont cousues plusieurs, parties tissées (30, 40) pour former plusieurs plans de séparation (10) qui à l'état rempli forment plusieurs chambres (2, 3).

8. - Procédé pour fabriquer un coussin à gaz à plusieurs chambres, dans lequel sur une partie de tissu de base (20) au moins une autre partie tissée (30, 40) est cousue pour former un plan de séparation (10) pour délimiter deux volumes et les parties de tissu (20, 30, 40) sont cousues au moyen d'une couture périphérique (22, 32, 42) pour former chacune une chambre (2, 3), les chambres (2, 3) étant disposées à l'opposé l'une de l'autre de part et d'autre du plan de séparation (10).

9. - Procédé selon la revendication 8, **caractérisé en ce que** les parties de tissu (20, 30, 40) sont après formation du plan de séparation (10) repliées l'une à l'opposé de l'autre et sont chacune cousue pour former une chambre (2, 3).
